# EUROPÄISCHE PATENTSCHRIFT

(11) **EP 2 445 952 B1**
(45) Veröffentlichungstag und Bekanntmachung des Hinweises auf die Patenterteilung: **13.03.2013**
(21) Anmeldenummer: 10721179.9
(22) Anmeldetag: 10.06.2010
(51) Int. Cl.: C08G 77/60, C08K 3/38

(54) **VERFAHREN ZUR HERSTELLUNG VON POLYSILANEN**
PROCESS FOR PREPARING POLYSILANES
PROCÉDÉ DE FABRICATION DE POLYSILANES

(30) Priorität: 24.06.2009 DE 102009027169
(43) Veröffentlichungstag der Anmeldung: 02.05.2012
(73) Patentinhaber: Wacker Chemie AG, 81737 München (DE)
(72) Erfinder: BOCKHOLT, Andreas, 80805 München (DE); FEIGL, Andreas, 81549 München (DE); RIEGER, Bernhard, 89275 Elchingen (DE)
(74) Vertreter: Fritz, Helmut
(86) Internationale Anmeldenummer: PCT/EP2010/058148
(87) Internationale Veröffentlichungsnummer: WO 2010/149499

(56) Entgegenhaltungen:
- DE-A1- 4 110 917

## Beschreibung

Die Erfindung ein Verfahren zur Herstellung von Polysilanen aus Monosilanen in Gegenwart von Lewis-sauren Borverbindungen.

Es existieren mehrere Synthesemethoden für die Darstellung von Polysilanen:
Die gängigste ist die sog. Wurtz-artige Kupplung von Chlorsilanen mit elementaren Alkalimetallen in hochsiedenden Lösemitteln. Diese wurde erstmals beschrieben in FS. Kipping (1921) J Chem Soc 119:830. Die Reaktionsführung ist aber aufgrund der harschen Reaktionsbedingungen und der hohen Reaktivität bzw. Empfindlichkeit der Edukte äußerst aufwendig. Des Weiteren ist die Produktverteilung nicht homogen und eine Modifizierung des Polysilans nur durch den Einsatz von anderen Monomeren möglich. Dabei eignen sich jedoch nur Monomere, bei denen die funktionellen Gruppen bei stark reduzierenden Reaktionsbedingungen erhalten bleiben, was die Auswahl an geeigneten Chlorsilanen stark einschränkt.
Des Weiteren können Hydrosilane mit Übergangsmetallkatalysatoren unter Wasserstoffabspaltung zu Polysilanen gekoppelt werden. Diese Polymerisationsmethode ist erst seit Ende der 1990er Jahre aus JF. Harrod, C. Aitken, E. Samuel (1985) J Organomet Chem 279:C11 bekannt. Die Luft- und Wasserempfindlichkeit der Übergangsmetallkatalysatoren und die Tatsache, dass fast ausschließlich primäre Silane für diese Art der Polymerisation geeignet sind, schränkt die Möglichkeiten dieser Art der Polysilansynthese deutlich ein. Außerdem kann die starke Wasserstoffentwicklung bei der Polymerisation in Substanz und das dabei auftretende Aufschäumen des Polymers bei gleichzeitiger Viskositätszunahme die Reaktionsführung erschweren. Zusätzlich ist eine vollständige Abtrennung der Katalysatorrückstände vom Polysilan nicht möglich.
Mit einer äußerst aufwendigen Monomersynthese können Polysilane auch aus maskierten Disilenen dargestellt werden. Diese Polymerisationsart wurde erstmals in K. Sakamoto, K. Obata, H. Hirata, M. Nakajima, H. Sakurai (1989) J Am Chem Soc 111:7641 beschrieben. Dabei limitiert jedoch die Monomersynthese die Wahl der Substituenten am Silicium ähnlich stark wie bei der Wurtz-artigen Kupplung. Mit dieser Methode ist somit weder eine günstige Monomersynthese noch eine flexible Silanpolymerisation möglich.
DE 102006034061 A1 beschreibt einen technologisch höchst anspruchsvollen Plasmaprozess zur Darstellung von Polysilan aus SiCl₄ und H₂. Dieser Prozess ist aber kosten- und energieaufwendig und benötigt sowohl komplexe Aufreinigung des Produkts als auch polymeranaloge Reaktionen zur Überführung des perchlorierten Polysilans in das eigentliche Polysilan. Eine Erzeugung von kohlenstoffhaltigen Polysilanen ist gänzlich unmöglich.
Eine weitere Möglichkeit zur Polysilansynthese ist die ringöffnende Polymerisation von Silazyklen, wobei diese Methode wiederum den Nachteil hat, dass die Monomersynthese relativ aufwendig und wiederum eine freie Wahl der Substituenten nicht möglich ist. Dies wurde zuerst in M. Cypryrk, Y. Gupta, K. Matyjaszewski (1991) J Am Chem Soc 113:1046 beschrieben. Außerdem besteht die Möglichkeit Dichlorsilane entweder elektrochemisch nach M. Ishifune, S. Kashimura, Y. Kogai, Y. Fukuhara, T. Kato, HB. Bu, N. Yamashita, Y. Murai, H. Murase, R. Nishida (2000) J Organomet Chem 611:26, oder schrittweise mit dilithiierten Silanspezies zu Polysilan nach JP. Wesson, TC. Williams (1981) J Polym Sci, Part A: Polym Chem 19:65 umzusetzen. Die elektrochemische Herangehensweise ist energieintensiv, der schrittweise Aufbau des Polysilans sehr aufwendig und praktisch nur für den Labormaßstab geeignet. Beide Methoden benötigen, wie die Plasmasynthese, eine polymeranaloge Umsetzung des perhalogenierten Polysilans.

Gemeinsame Probleme dieser bekannten Synthesemethoden sind die Reinigung des Polymers, geringe Molmassen und zu heterogene Produktverteilung. Vor allem die Reinheit des Polymers in Hinsicht auf Metallverunreinigungen durch den Katalysator macht sie für den Einsatz in technischen/elektronischen Bauteilen nur bedingt effizient.
Außerdem ist bei den bekannten Synthesewegen eine freie Variation der Substituenten am Polymerrückgrat und damit eine kontrollierte Einstellung des Kohlenstoffgehalts nur beschränkt möglich. Dies ist nach DR. Miller, J. Michl (1989) Chem Rev 89:1359 einerseits auf die zum Teil äußerst harschen Reaktionsbedingungen andererseits auch auf die Natur der verwendeten Katalysatoren zurückzuführen.

Gegenstand der Erfindung ist ein Verfahren zur Herstellung von Polysilanen der allgemeinen Formel (1)

SiₙR₂ₙ₊₂ (1),

bei dem Silan der allgemeinen Formel (2)

R¹ₘSiH₄₋ₘ (1a),

in Gegenwart von Borverbindungen der allgemeinen Formel (3)

R²₃B (3),

umgesetzt wird, wobei
- **R¹**: Kohlenwasserstoffrest mit 1 bis 18 Kohlenstoffatomen,
- **R**: Wasserstoff oder einen Rest **R¹,**
- **R²**: Fluor, Chlor, Brom oder Kohlenwasserstoffrest mit 1 bis 18 Kohlenstoffatomen, der Substituenten tragen kann, die ausgewählt werden aus Fluor, Chlor, Brom, Iod und NO₂,
- **n**: ganzzahlige Werte von 2 bis 100000 und
- **m**: die Werte 0, 1 oder 2 bedeuten.

Die Polysilane der allgemeinen Formel (1) lassen sich auf einfache Weise unter milden Reaktionsbedingungen durch die Umsetzung von Silanen der allgemeinen Formel (2) mit den Lewis-sauren Borverbindungen der allgemeinen Formel (3) darstellen. Auf diese Weise kann auf Metallkatalysator verzichtet werden. Weiterhin ist es nicht nötig, die erhaltenen Polysilane der allgemeinen Formel (1) polymeranalog zu modifizieren, zudem ist die Reinigung des Produkts vom Katalysator einfach. Insbesondere ist meist Abdestillation, Absublimation oder chromatographische Abtrennung von leicht flüchtigen Ausgangsstoffen und Katalysator leicht möglich.

Dabei kann hauptsächlich über die Parameter Reaktionstemperatur und Katalysatorkonzentration Einfluss auf das erhaltene Polysilan der allgemeinen Formel (1) genommen werden: Mit steigender Reaktionstemperatur und Katalysatorkonzentration nimmt der mittlere Polymerisationsgrad zu. Zusätzlich kann über die Katalysatorkonzentration und -natur der Kohlenstoffgehalt des Polysilans gesteuert werden. Durch Variation der Konzentration an Katalysator und seiner Lewis-Acidität kann mittels SiH₄-Freisetzung der Kohlenstoffgehalt des erhaltenen Polymers eingestellt werden.

Vorzugsweise bedeutet R¹ einen von ethylenisch oder acetylenisch ungesättigten Bindungen freien Kohlenwasserstoffrest mit 1 bis 18 Kohlenstoffatomen.

Beispiele für Kohlenwasserstoffreste R¹ sind Alkylreste, wie der Methyl-, Ethyl-, n-Propyl-, iso-Propyl-, n-Butyl-, isoButyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl- Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest;

Bevorzugt handelt es sich bei dem Rest R¹ um einen Phenylrest oder linearen Alkylrest, insbesondere mit 1 bis 10, besonders 1 bis 6 Kohlenstoffatomen. Besonders bevorzugte Kohlenwasserstoffreste R¹ sind Phenyl-, n-Propyl-, Ethyl- und Methylrest.

Beispiele für R² und bevorzugte Reste R² sind die R¹ angegebenen Beispiele und bevorzugten Reste, die zusätzlich Substituenten tragen können, die ausgewählt werden aus Fluor, Chlor, Brom, Iod und NO₂. Vorzugsweise sind alle drei Reste R² gleich. Bevorzugte Beispiele für substituierte Reste R² sind halogenierte Kohlenwasserstoffreste, wie der Chlormethyl-, 3-Chlorpropyl-, 3-Brompropyl-, Trifluormethyl-, Pentafluoroethyl- , Heptafluorpropyl-, 3,3,3-Trifluorpropyl-, 5,5,5,4,4,3,3-Heptafluorpentylrest, sowie der Pentafluorophenyl-, Pentachlorphenyl-, und Heptafluortolylrest.

Vorzugsweise bedeutet n ganzzahlige Werte von mindestens 3, besonders bevorzugt mindestens 5, insbesondere mindestens 10 und höchstens 50000, besonders bevorzugt höchstens 10000, insbesondere höchstens 1000.

Die Polysilane der allgemeinen Formel (1) können vollständig mit Kohlenwasserstoffresten **R¹** abgesättigt sein, d.h., **R** = **R¹** oder sowohl Kohlenwasserstoffreste **R¹** als auch Wasserstoffreste enthalten. Vorzugsweise sind in den Polysilanen der allgemeinen Formel (1) mindestens 10 Mol-%, besonders bevorzugt mindestens 20 Mol-%, insbesondere mindestens 30 Mol-% und höchstens 90 Mol-%, besonders bevorzugt höchstens 80 Mol-%, insbesondere höchstens 70 Mol-% der Reste **R** Kohlenwasserstoffreste **R¹.**

Die Polysilane der allgemeinen Formel (1) können linear, verzweigt oder vernetzt sein. Vorzugsweise enthalten in den Polysilanen der allgemeinen Formel (1) mindestens 10 Mol-%, besonders bevorzugt mindestens 20 Mol-%, insbesondere mindestens 30 Mol-% und höchstens 70 Mol-%, besonders bevorzugt höchstens 60 Mol-% der Siliciumatome mindestens 3 Si-Si Bindungen.

Es können reine Silane der allgemeinen Formel (2) oder Gemische eingesetzt werden. Die Reste **R** können so auch unterschiedliche Kohlenwasserstoffreste **R¹** sein.

In einer besonderen Ausführungsform können maximal 10, vozugsweise maximal 3 Mol-% an Silanen der allgemeinen Formel (2) zugesetzt werden, bei denen **m** den Wert 3 bedeutet. Dies ist aber nicht bevorzugt.

Vorzugsweise beträgt die Temperatur der Umsetzung mindestens 20°C, besonders bevorzugt mindestens 50°C, insbesondere mindestens 80°C und höchstens 200°C, besonders bevorzugt höchstens 160°C, insbesondere höchstens 120°C.

Die Umsetzung kann ohne oder mit Lösungsmittel durchgeführt werden. Falls Lösungsmittel verwendet werden, sind aprotische und unpolare Lösungsmittel oder Lösungsmittelgemische, vorzugsweise mit einem Siedepunkt bzw. Siedebereich von bis zu 120°C bei 0,1 MPa bevorzugt. Bevorzugte Lösungsmittel sind Alkane, wie Pentan, n-Hexan, Hexan-Isomerengemische, Heptan, Oktan, Waschbenzin, Petrolether und Siloxane, insbesondere lineare Dimethylpolysiloxane mit Trimethylsilylendgruppen mit bevorzugt 0 bis 6 Dimethylsiloxaneinheiten, oder cyclische Dimethylpolysiloxane mit bevorzugt 4 bis 7 Dimethylsiloxaneinheiten, beispielsweise Hexamethyldisiloxan, Octamethyltrisiloxan, Octamethylcyclotetrasiloxan und Decamethylcyclopentasiloxan. Vorzugsweise wird die Umsetzung ohne Lösungsmittel durchgeführt.

Vorzugsweise werden pro 100 Gewichtsteile Silane der allgemeinen Formel (2) mindestens 0,1 Gewichtsteile, besonders bevorzugt mindestens 0,2 Gewichtsteile, insbesondere mindestens 0,5 Gewichtsteile und höchstens 30 Gewichtsteile, besonders bevorzugt höchstens 15 Gewichtsteile, insbesondere höchstens 5 Gewichtsteile Borverbindungen der allgemeinen Formel (3) eingesetzt.

Die Umsetzung kann in einem kontinuierlichen oder einem diskontinuierlichen Prozess betrieben werden.

Die Umsetzung wird vorzugsweise unter Schutzgas, insbesondere Ar oder N₂ durchgeführt.

Die erhaltenen Polysilane der allgemeinen Formel (1) können zum Beispiel in auf organischen Halbleitern basierenden elektronischen Bauelementen, als lichtemittierende oder Lochleiterschichten eingesetzt werden.
Außerdem eignen sie sich beispielsweise insbesondere als Precursoren für die Abscheidung von Silicium- und Siliciumcarbidschichten, bei denen ein bestimmter Kohlenstoffgehalt eingestellt werden muss.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel

20 mg (0,04 mmol) Tris(pentafluorophenyl)boran werden unter Schutzgas eingewogen in einem 25 mL Schlenkkolben. Dann wird 1 g (9,2 mmol) Phenylsilan zum Katalysator gegeben und durch 3 Gefrier/Auftauzyklen entgast. Danach wird die Reaktionslösung auf 100 °C erhitzt und für 2 Tage gerührt. Verbleibendes Monomer und entstandene Nebenprodukte werden am Feinvakuum entfernt. Das Polysilan wird als viskose gelbliche Flüssigkeit erhalten. Die Ergebnisse sind in nachstehender Tabelle aufgeführt:

| Verhältnis Substrat zu Katalysator | Temperatur /°C | Mₙ /g/mol | M_{w} /g/mol | SiH₄-Entwicklung |
|---|---|---|---|---|
| 230 | 100 | 800 | 900 | - |
| 230 | 120 | 1670 | 2710 | - |
| 16 | 60 | 1440 | 2000 | + |
| 16 | 100 | 1500 | 2170 | + |

## Patentansprüche

1. Verfahren zur Herstellung von Polysilanen der allgemeinen Formel (1)
SiₙR₂ₙ₊₂ (1),
bei dem Silan der allgemeinen Formel (2)
R¹ₘSiH₄₋ₘ (1a).
in Gegenwart von Borverbindungen der allgemeinen Formel (3)
R²₃B (3),
umgesetzt wird, wobei
**R¹** Kohlenwasserstoffrest mit 1 bis 18 Kohlenstoffatomen,
**R** Wasserstoff oder einen Rest **R¹,**
**R²** Fluor, Chlor, Brom oder Kohlenwasserstoffrest mit 1 bis 18 Kohlenstoffatomen, der Substituenten tragen kann, die ausgewählt werden aus Fluor, Chlor, Brom, Iod und NO₂,
**n** ganzzahlige Werte von 2 bis 100000 und
**m** die Werte 0, 1 oder 2 bedeuten.

2. Verfahren nach Anspruch 1, bei dem die Kohlenwasserstoffreste **R¹** ausgewählt werden aus Phenyl-, n-Propyl-, Ethyl- und Methylrest.

3. Verfahren nach Anspruch 1 oder 2, bei dem die Reste **R²** halogenierte Kohlenwasserstoffreste sind.

4. Verfahren nach Anspruch 1 bis 3, bei dem die Temperatur der Umsetzung 20°C bis 200°C beträgt.

5. Verfahren nach Anspruch 1 bis 4, bei dem die Umsetzung ohne Lösungsmittel durchgeführt wird.

6. Verfahren nach Anspruch 1 bis 5, bei dem pro 100 Gewichtsteile Silane der allgemeinen Formel (2) 0,1 bis 30 Gewichtsteile Borverbindungen der allgemeinen Formel (3) eingesetzt werden.

## Claims

1. Process for preparing polysilanes of the general formula (1)
SiₙR₂ₙ₊₂ (1),
wherein silane of the general formula (2)
R¹ₘSiH₄₋ₘ (1a),
is reacted in the presence of boron compounds of the general formula (3)
R²₃B (3),
where
**R¹** is a hydrocarbon radical having from 1 to 18 carbon atoms
**R** is hydrogen or a radical **R¹,**
**R²** is fluorine, chlorine, bromine or a hydrocarbon radical which has from 1 to 18 carbon atoms and may bear substituents selected from among fluorine, chlorine, bromine, iodine and NO₂,
**n** is an integer from 2 to 100 000 and
**m** is 0, 1 or 2.

2. Process according to Claim 1, wherein the hydrocarbon radicals **R¹** are selected from among phenyl, n-propyl, ethyl and methyl radicals.

3. Process according to Claim 1 or 2, wherein the radicals **R²** are halogenated hydrocarbon radicals.

4. Process according to any of Claims 1 to 3, wherein the temperature in the reaction is from 20°C to 200°C.

5. Process according to any of Claims 1 to 4, wherein the reaction is carried out without solvent.

6. Process according to any of Claims 1 to 5, wherein from 0.1 to 30 parts by weight of boron compounds of the general formula (3) are used per 100 parts by weight of silanes of the general formula (2).

## Revendications

1. Procédé de fabrication de polysilanes de formule générale (1)
SiₙR₂ₙ₊₂ (1)
dans lequel un silane de formule générale (2)
R¹ₘSiH₄₋ₘ (1a)
est mis en réaction en présence de composés de bore de formule générale (3)
R²₃B (3)
R¹ signifiant un radical hydrocarboné de 1 à 18 atomes de carbone,
R signifiant l'hydrogène ou un radical R¹,
R² signifiant le fluor, le chlore, le brome ou un radical hydrocarboné de 1 à 18 atomes de carbone, qui peut porter des substituants choisis parmi le fluor, le chlore, le brome, l'iode et NO₂,
n signifiant des nombres entiers de 2 à 100 000 et
m signifiant les valeurs 0, 1 ou 2.

2. Procédé selon la revendication 1, dans lequel les radicaux hydrocarbonés R¹ sont choisis parmi les radicaux phényle, n-propyle, éthyle et méthyle.

3. Procédé selon la revendication 1 ou 2, dans lequel les radicaux R² sont des radicaux hydrocarbonés halogénés.

4. Procédé selon les revendications 1 à 3, dans lequel la température de la réaction est de 20 °C à 200 °C.

5. Procédé selon les revendications 1 à 4, dans lequel la réaction est réalisée sans solvant.

6. Procédé selon les revendications 1 à 5, dans lequel 0,1 à 30 parties en poids de composés de bore de formule générale (3) sont utilisées pour 100 parties en poids de silanes de formule générale (2).
